# EUROPEAN PATENT SPECIFICATION

(11) **EP 3 507 514 B1**
(45) Date of publication and mention of the grant of the patent: **23.12.2020**
(21) Application number: 17751977.4
(22) Date of filing: 08.08.2017
(51) Int. Cl.: F16C 32/04

(54) **MAGNETIC THRUST BEARING**
MAGNETISCHES AXIALLAGER
PALIER DE BUTÉE MAGNÉTIQUE

(30) Priority: 31.08.2016 US 201662381746 P
(43) Date of publication of application: 10.07.2019
(73) Proprietor: Carrier Corporation, Palm Beach Gardens, FL 33418 (US)
(72) Inventor: TANGUDU, Jagadeesh, East Hartford Connecticut 06108 (US); KSHIRSAGAR, Parag M., East Hartford Connecticut 06108 (US)
(74) Representative: Dehns
(86) International application number: PCT/US2017/045873
(87) International publication number: WO 2018/044513

(56) References cited:
- US-A1- 2010 231 076
- US-A1- 2011 163 622
- US-A1- 2015 330 444

## Description

The disclosure relates to magnetic bearings. More particularly, the disclosure relates to electromagnetic bearings utilized in turbomachines.

A well-developed art exists in active magnetic bearings. US Patent Application Publication 2011/0163622A1, published July 7, 2011, discloses an electromagnetic bearing providing radial and axial support. For axial support, the stator has a pair of opposite axial poles are joined at an outer diameter (OD) by an axial back iron. An axial coil circumferentially wraps inboard of the back iron and creates a flux path through the axial poles and back iron with an inboard gap between the axial poles spanned by an actuator target formed by a rotor lamination stack within the gap.

Radially inboard of the axial coil, the stator comprises a radial actuator pole assembly formed by a lamination stack. This lamination stack has a full annulus outer ring portion and a plurality of radially-inward projections each of which is wrapped by an associated radial control coil. Adjacent the radial actuator pole assembly at opposite axial ends thereof, sandwiched between the radial actuator pole assembly and the axial poles, are a pair of permanent magnetic rings.

A pair of radial flux loops are created at opposite sides proceeding radially from the actuator target through the radial pole assembly, turning axially outboard through the permanent magnet and then radially inboard through the associated axial pole, turning back axially inward to enter the end of the actuator target and then turning back radially outward. Thus, a pair of radial fluxes of opposite sign are encircled by the axial flux loop.

Another four-radial-pole radial bearing configuration involves flux paths that pass radially and circumferentially rather than axially. In this configuration, switching can be between several conditions. One group involves flux paths with a central diametric leg through one opposed pair of poles and two circumferential legs passing circumferentially through the back iron around the respective poles of the other pair. The two pairs thus create two possible such paths with two possible directions for each path. Additionally another group involves a first flux path leg passing radially through one pole, turning circumferentially to pass through the back iron to one of the two adjacent poles and then returning back radially through that adjacent pole to meet the first leg in the shaft.

US 2015 330444 A1 discloses an electromagnetic actuator with a radial magnetic control circuit and two axial magnetic control circuits.

Viewed from a first aspect, the invention provides a magnetic bearing comprising: a rotor to be supported for rotation about an axis, the rotor comprising a metallic core having a radially outward extending flange, wherein the flange has first and second axial end faces;n a stator extending from a first end to a second end and comprising: one or more first permanent magnet rings; one or more second permanent magnet rings of polarity substantially opposite to a polarity of the one or more first permanent magnet rings; a first axial winding circumscribing the axis; a second axial winding circumscribing the axis; a first end pole; and a second end pole; wherein the first and second axial end faces of the flange are separated from the first and second end poles by gaps wherein the magnetic bearing is a thrust bearing without radial windings.

Optionally, the one or more first permanent magnets and the one or more second permanent magnets are non-rare earth magnets.

Optionally, the magnetic bearing is lacking stator laminates.

Optionally, the metallic core radial flange carries an axially laminated metallic jacket.

Optionally, the first end pole and second end pole extend radially inboard of the axially laminated metallic jacket.

Optionally, the flange carries: a radially laminated first laminate adjacent the first end pole; and a radially laminated second laminate adjacent the second end pole.

Optionally, the radially laminated first laminate is a continuous annulus and the radially laminated second laminate is a continuous annulus.

Optionally, the metallic core radial flange carries an annular magnet.

Optionally, the metallic core radial flange carries a magnet having essentially radial polarization.

Optionally, the metallic core radial flange carries a pair of magnets of axially opposed polarization.

Optionally, the first permanent magnet ring is a first continuous full annulus ring and the second permanent magnet ring is a second continuous full annulus ring.

Optionally, the stator further comprises: a central back iron between the one or more first permanent magnets and the one or more second permanent magnets.

Optionally, the central back iron has an inner diameter rim radially inboard of the first axial winding and the second axial winding.

Optionally, a method for using the magnetic bearing comprises running current through: the first axial winding; and the second axial winding, so as to: control axial force or position by simultaneously powering the first axial winding and the second radial winding.

Optionally, the first and second axial windings are powered by at least one H-bridge amplifier.

Optionally, the first and second axial windings are each powered by a respective associated H-bridge amplifier.

Optionally, a machine comprises the bearing.

The details of one or more embodiments are set forth in the accompanying drawings and the description below. Other features, objects, and advantages will be apparent from the description and drawings, and from the claims.
FIG. 1 is a partial, partially schematic central longitudinal axial sectional half view of an electromagnetic bearing in a compressor.
FIG. 2 is a schematic central longitudinal sectional median magnetic flux diagram of the bearing of FIG. 1.
FIG. 3 is a partial, partially schematic central longitudinal axial sectional half view of a second electromagnetic bearing in a compressor.
FIG. 4 is a partial, partially schematic central longitudinal axial sectional half view of a third electromagnetic bearing in a compressor.
FIG. 5 is a partial, partially schematic central longitudinal axial sectional half view of a fourth electromagnetic bearing in a compressor.
FIG. 6 is a schematic view of an H-bridge amplifier used to power one or more coils.

Like reference numbers and designations in the various drawings indicate like elements.

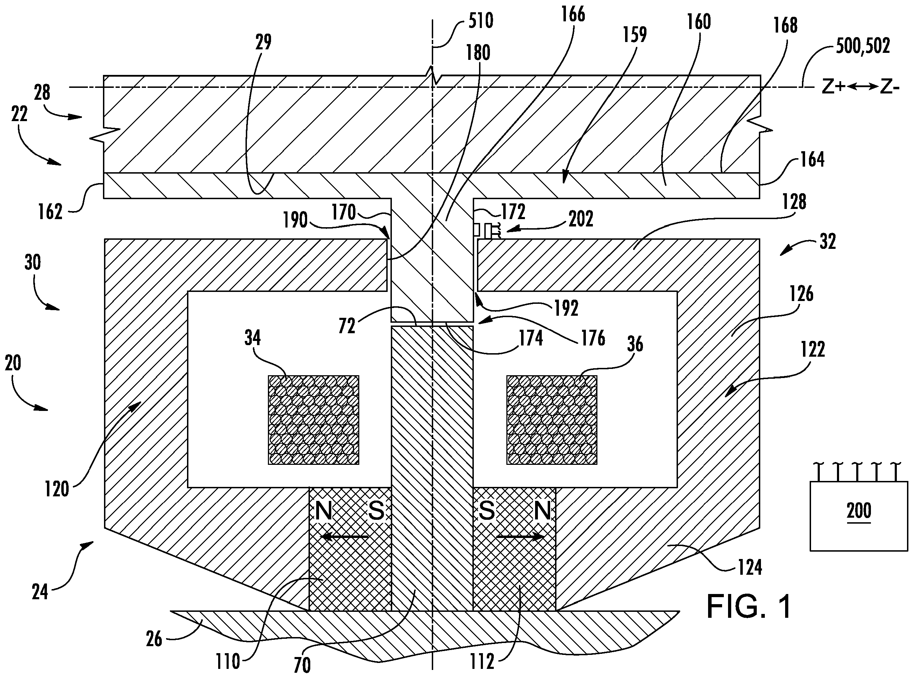

FIG. 1 shows an axial homopolar bearing 20 having a rotor 22 and a stator 24. The stator has a central longitudinal axis 500. The rotor has a central longitudinal axis 502. The axes 500 and 502 are nominally normally coincident; however, the bearing may absorb slight excursions of the rotor axis relative to the stator axis. The magnetic bearing may be used in a turbomachine (e.g., a compressor) wherein the stator is mounted to or otherwise integrated with) a housing or case of the compressor and the rotor is mounted to (or otherwise integrated with) a shaft of the compressor. A transverse centerplane is shown as 510. For purposes of schematic illustration, the housing or case is shown as 26 and the shaft is shown as 28.

The bearing extends from a first end 30 to a second end 32. The stator includes a number of coils (e.g., metallic wire windings). For axially supporting the rotor, near the first end, the stator includes a first axial coil 34 circumscribing the axes 500, 502. Near the second end 32, the stator includes a second axial coil 36 also circumscribing the axes 500, 502. The exemplary axial coils which are around axes 500, 502 may be electrically connected in series or controlled separately so that currents through them create an axial control field that either opposes or assists the permanent magnet bias field. The direction of this permanent magnet bias field depends upon the magnetization of the permanent magnet 110, 112.

The stator comprises a first permanent magnet ring 110 (FIG. 1) and a second permanent magnet ring 112 coaxially axially spaced apart from each other. The permanent magnet rings have substantially opposite axial polarity. In this example, the south poles of both magnets face the inward to the transverse centerplane 510 and the axially-opposite north poles face axially outboard/outward. The magnet rings may be full annulus continuous rings or may be segmented (discussed below). Manufacturing tolerances will mean that exact opposite polarity may not be achieved. Typically, this will be achievable within 20°or within 10°. Some alternative configurations may involve intentionally shifting the polarities somewhat off axial so that they may be up to an exemplary 60°off anti-parallel.

Each ring 110, 112 has an inner diameter (ID) face, an outer diameter (OD) face, and opposite axial end faces. The rings 110 and 112 are mounted at opposite sides (axial ends) of a central back iron 70.

Axially outboard of the rings 110, 112 are respective end caps or end poles 120, 122. In this example, each end pole is a single circumferential piece rather than segmented (e.g., as discussed in WO 2016/137775 A1, state of the art under Article 54(3) EPC) . These each have a generally C-shaped half cross-section with a radially outboard sleeve portion 124, a radially extending end web 126, and a radially inboard sleeve portion 128. This defines an annular channel accommodating/receiving the associated axial winding 34, 36.

The axial coils 36, 34 on either end of the bearing may be wound circumferentially about the axes 500, 502 in opposite directions. In such a case, the coils can be either series connected or individually controlled with the currents being in the same circumferential direction with respect to the axes 500, 502. If the axial coils 36, 34 are wound in the same circumferential direction, then the direction of the currents flowing through the axial coils must be opposite to each other. The axial coils can be either series connected or individually controlled with appropriate connections.

For radially supporting the rotor, one or more separate radial bearings (e.g., mechanical bearings or magnetic bearings) may be provided. Alternatively, the bearing 20 may be an integrated bearing as disclosed in WO 2016/137775 A1, state of the art under Article 54(3) EPC.

The exemplary rotor 22 comprises a metallic member 159 which, in turn, comprises the combination of a sleeve 160 and a radially outwardly extending flange 166. The sleeve extends from a first end 162 to a second end 164 and has an inboard or inner diameter (ID) surface 168. The ID surface 168 may contact the outer diameter (OD) surface 29 of the shaft 28. One exemplary attachment mechanism is a thermal shrink fit of the metallic member onto the shaft. An alternative mechanism is a keyway and set screw mechanism. In other embodiments, the metallic member 159 and shaft may be unitarily formed as a single piece. The flange has first and second axial end faces 170 and 172 and an outer diameter (OD) rim surface 174. The outer diameter surface rim 174 is spaced by a gap 176 from the inner diameter (ID) surface 72 of the central back iron 70. Similarly, the faces 170 and 172 are separated from surfaces 180 of the inboard sleeve portions 128 of the respective end poles 120 and 126 by gaps 190 and 192.

Thus, as far as the axial bearing is concerned, the FIG. 1 example lacks any laminate on either the rotor or the stator.

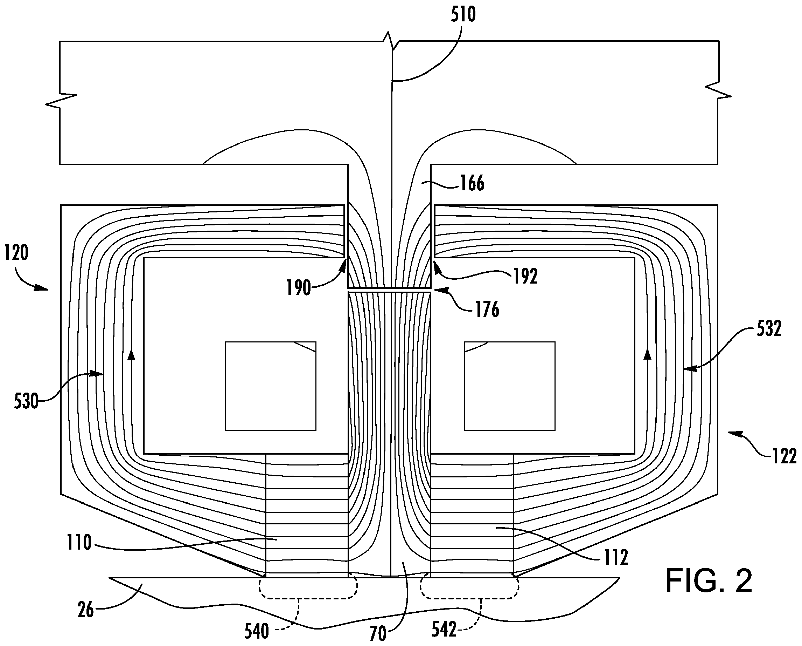

FIG. 2 shows permanent magnet (PM) flux paths (loops) 530, 532 on the respective first and second sides of the transverse centerplane 510 (which forms a dividing plane between the two loops in this symmetric situation). For reference, a description of the first flux path starts axially at ring 110, flows axially-out, radially-in, and axially-in the end pole 120. The first flux path then crosses the axial airgap 190, enters axially into and leaves radially out from rotor flange 166, crosses the radial airgap 176 radially out. It then enters the inner diameter surface of center stator pole 70, passes radially outward in the stator pole 70 and then turns axially outward to return to the ring 110.

For reference, a description of the second flux path 532 starts axially at ring 112, flows axially-out, radially-in, and axially-in the end pole 122. The first flux path then crosses the axial airgap 192, enters axially into and leaves radially out from rotor flange 166, crosses the radial airgap 176 radially out. It then enters the inner diameter surface of center stator pole 70, passes radially outward in the stator pole 70 and then turns axially outward to return to the ring 112. FIG. 2 also shows leakage paths 540 and 542 (see WO 2016/137775 A1, state of the art under Article 54(3) EPC).

These two flux paths are defined for a steady state condition when there is no current in the axial coils 34, 36. In operation, responsive to displacements sensed by the sensor 202, the controller will energize the coils to counter the displacement. For example, a displacement of the rotor in the Z- direction from a centered condition will cause the airgap 190 to become axially larger than the airgap 192. In that situation, the controller applies current to the coils so that the current in coil 34 creates flux additive to the PM flux in the first loop 530 thus increasing the flux across airgap 190 to increase the attraction force between the first end pole and the flange. Simultaneously, current in the coil 36 is subtractive to the PM flux in the second loop 532 to decrease flux across airgap 192 which in-turn reduces the attraction force between the second end pole and the rotor flange. This will tend to re-center the flange in a feedback control loop. Various algorithms may be used for the control. For example, these may include fixed incremental adjustments of the current up or down and in sign to center or the adjustments may be proportional to the sensed displacement.

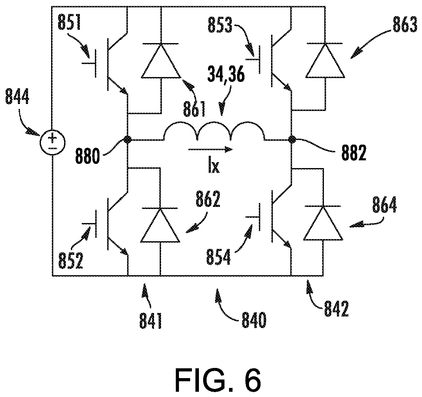

Electrical hardware may comprise a traditional H-bridge for control of current in the coils 34 and 36 such as in WO 2016/137775 A1 (state of the art under Article 54(3) EPC). FIG. 6 shows an H-bridge amplifier 840 used to power one or more coils. This may be controlled by or integrated with the controller 200. In one example, each H-bridge amplifier 840 has a single associated coil and vice-versa. This allows independent powering of the coils so that different current magnitudes may be applied to each. The amplifier 840 has two legs or branches 841 and 842 connected in parallel to a voltage source 844. The exemplary voltage source 844 is a constant DC voltage source and may be shared by the H-bridge amplifiers of the different coils.

The terminals 880 and 882 of the coil are connected across central locations of the two legs 841 and 842. To each side (high voltage and low voltage) of each leg, the terminal 880, 882 is connected to the voltage source via the parallel combination of a respective switching device 851, 852, 853, 854 and diode 861, 862, 863, 864. Exemplary switching devices are gate controlled switching devices such as insulated gate bipolar transistors (IGBT) or metal oxide field effect transistors (MOSFET). As noted above, 880 and 882 may represent terminals of an individual coil 34 or 36. Alternatively, the coils may be in series powered by a single H-bridge amplifier so that the terminal 880 is one terminal of the first coil, the terminal 882 is one terminal of the second coil, and the other terminals of the coils are connected to each other.

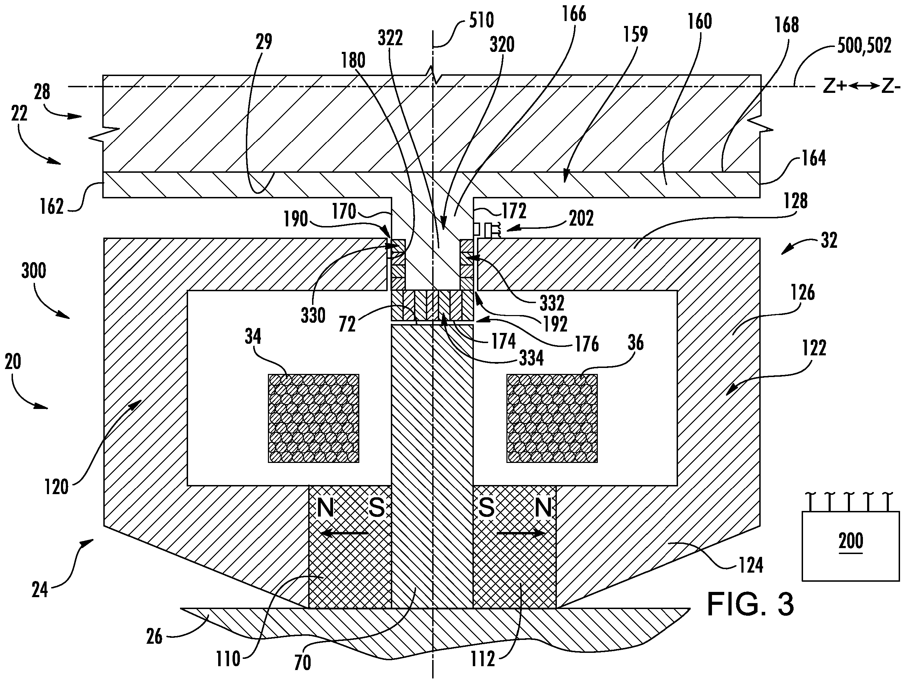

FIG. 3 shows an alternative bearing 300 otherwise similar to the bearing 20 except for the flange 166 being replaced by a flange structure 320 having a core portion 322 formed of the monolithic metal and several laminates 330, 332, 334. The exemplary end faces of the core 322 are stepped to accommodate the laminates 330 and 332. These laminates are respectively formed as groups of concentric radial rings one inboard of another. These, for example, may be formed as sections of tube of progressively smaller diameter from outboard to inboard. The laminate 334 is formed as an axial stack of disks whose inner diameter (ID) boundaries contact the outboard rim of the flange core 322 and the adjacent outer diameter surfaces of the outboardmost rings in the laminates 330 and 332, respectively.

In operation, the laminates 330 and 332 function to reduce impact of Eddy current caused by the high frequency variation in control current used to regulate the rotor axial position. These laminates thus reduce the impact of rotor losses due to eddy currents. The laminate 334 functions to also reduce the impact of Eddy currents and corresponding losses and thereby reduce heating of rotor components.

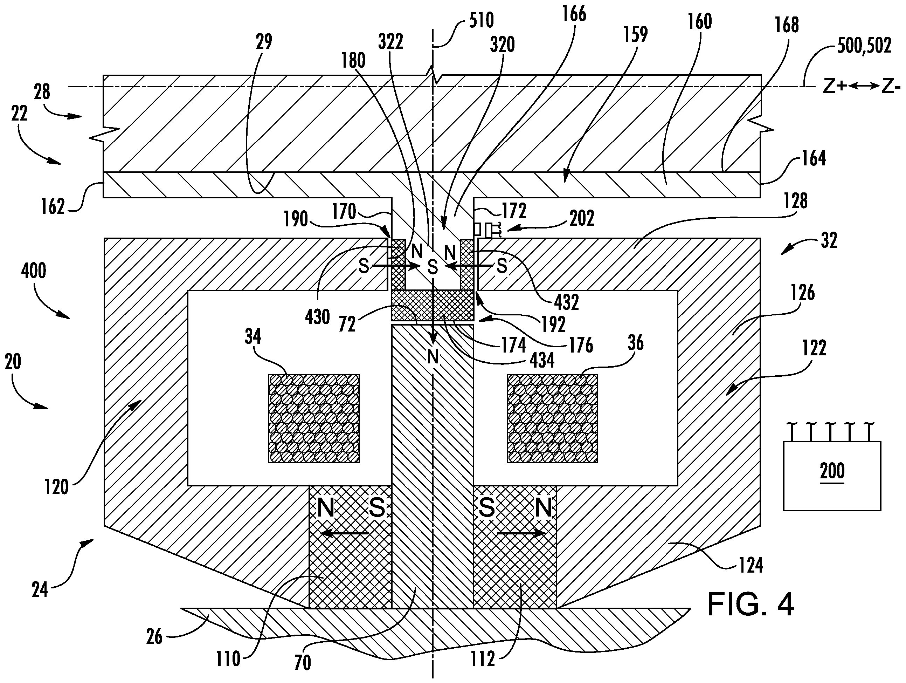

FIG. 4 shows a system 400 otherwise similar to the system 300 but wherein the laminates 330, 332, 334 are replaced with permanent magnets 430, 432, and 434, respectively. In the illustrated embodiment, the polarities of the magnets and the magnets 110 and 112 are oriented to have the same direction of flux circulation on each side of the centerplane 510, with the two directions being opposite each other. Thus, if the magnets 110 and 112 have north polarity away from the centerplane 510, the magnets 430 and 432 have north polarity toward the centerplane and the magnet 434 has north polarity away from the axes 500, 502.

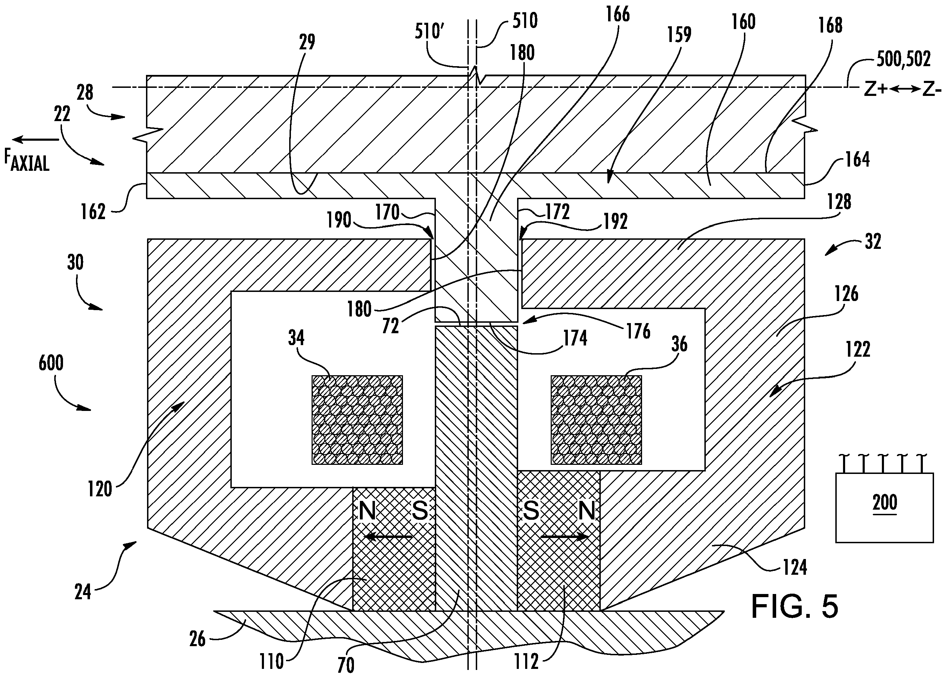

FIG. 5 shows a system 600 having an asymmetry across the transverse centerplane 510. For purposes of discussion, one example of the transverse centerplane in an asymmetric bearing may be defined as a plane along the center of the flange 166.

The exemplary FIG. 5 embodiment shows an asymmetric variant of the FIG. 1 embodiment. However, asymmetric versions of the other embodiments are also possible as are versions having other asymmetries. The asymmetry may be selected to provide a baseline axial bias force to the rotor in the Z- direction to counter a loading force F_{AXIAL} (e.g., due to pressure difference when the bearing is in a compressor or due to gravity if the shaft orientation is vertical) on the rotor in the Z+ direction.

The illustrated asymmetry involves maintaining symmetry between the coils 34 and 36 (e.g., they have the same number of turns and carry a common current in opposite directions). Further coil symmetries include the same cross-sectional shape, position relative to the axes 500, 502, and wire.

Alternative embodiments may have asymmetries between the two coils 34 and 36. Thus, to provide a similar direction of bias force, the second coil 36 could have more turns than the first coil 34 if the two coils were powered in series.

A main illustrated asymmetry is between the rings 110 and 112. The magnet 112 may be, in one or more ways, more powerful and/or have a greater physical dimension than the magnet 110. In the illustrated embodiment, the magnets may be of like materials and like circumferential extent but with the magnet 112 of greater longitudinal cross-sectional area. In the exemplary embodiment, they are of similar longitudinal dimension but the magnet 112 is of greater radial span. With the compressor housing 26 or an adjacent back iron (not shown) of the stator essentially defining a fixed outer diameter, the exemplary magnet 112 thus extends inward to a smaller inner diameter. An additional associated asymmetry is that the pole 122 is correspondingly more massive than the pole 120. Thus, in the exemplary embodiment, the inboard rim surface of the outboard sleeve portion 124 of the second end pole 122 has a larger radial span than that of the first end pole 120 to correspond to the adjacent dimensions of the mating face of the magnet 112. Similarly, the end 180 of the inboard sleeve portion 128 is larger to accommodate the broadened flux distribution. The asymmetry will effectively shift the meeting plane of the two flux distributions to a location 510' axially displaced from the transverse centerplane 510 toward the first end pole.

Exemplary laminates are axial stacks of steel plates (e.g., soft magnetic steel or silicon steel). Use of laminate reduces Eddy loss relative to a single block of steel. Manufacturing tolerances on the physical orientations of the laminates and other components may be much tighter than polarization tolerance. Typically, the relevant surfaces will be within 1.0° or 2.0° of their nominal orientation. However, broader excursions may be intentionally designed in.

FIG. 1 further shows a controller 200. The controller may be integrated with or provided by a controller of the turbomachine (e.g. electric compressor) as a whole or the system (e.g., refrigeration system).The controller may receive user inputs from an input device (e.g., switches, keyboard, or the like) and sensors (not shown, e.g., pressure sensors and temperature sensors at various system locations and, specifically for bearing control, radial position sensors and axial position sensors (e.g., a single Z sensor 202 is shown mounted in the bearing)). The controller may be coupled to the sensors and controllable system components (e.g., valves, the bearings, the compressor motor, vane actuators, and the like) via control lines (e.g., hardwired or wireless communication paths). The controller may include one or more: processors; memory (e.g., for storing program information for execution by the processor to perform the operational methods and for storing data used or generated by the program(s)); and hardware interface devices (e.g., ports) for interfacing with input/output devices and controllable system components.

Other variations involve circumferentially segmenting the permanent magnets. The segmenting may, in some embodiments, create a segmented full annulus (with essentially no circumferential gaps between segments). However, other noteworthy embodiments involve segments separated by gaps. Examples of such segmentation are discussed in WO 2016/137775 A1, state of the art under Article 54(3) EPC. Similarly, other components such as the laminates may be segmented or continuous. A variation on the laminates 330 and 332 with their surfaces extending axially is to use a spiral of a metallic sheet rather than a concentric group of progressively incrementally sized metallic rings.

With such a pair of segmented permanent magnets 110, 112 (alternatively characterized as two circumferential arrays of permanent magnets) a number of further variations are possible. In a basic variation, all magnets within each of the two circumferential arrays have the same polarity as the other magnets in such array with the polarity of the two arrays being opposite to each other. In yet other variations, the polarities of the individual two magnets of the subunit are opposite each other but the magnets in each array need not be the same polarity.

Contrasted with different alternative prior art bearings, various implementations may have one or more of several advantages. The flux focusing is discussed above. For example, various embodiments may use non-rare earth magnets at least for the rings 110 and 112. This reduces costs. Rare earth magnets are characterized by magnets with use rare earth elements such as dysprosium, terbium, europium, neodymium, samarium, and yttrium. Combined contents of those elements will typically be at least 10.0% by weight (e.g. 10.0% to 50.0%) or at least 20.0%. Neodymium is typically the key element in the main class of rare earth magnets (neodymium magnets), thus non-rare earth magnets may have under 10.0% by weight of this element in particular. Another class is samarium-cobalt magnets (e.g. typically 15% to 45% samarium by weight) Thus, in non-rare earth magnets, samarium may also be below 15.0% or 10.0% by weight. Exemplary non-rare earth magnets are ferrite/ceramic magnets, alnico, manganese bismuth, iron nitride, and the like. However, other embodiments may use rare earth magnets or combinations.

The use of "first", "second", and the like in the description and following claims is for differentiation within the claim only and does not necessarily indicate relative or absolute importance or temporal order. Similarly, the identification in a claim of one element as "first" (or the like) does not preclude such "first" element from identifying an element that is referred to as "second" (or the like) in another claim or in the description.

Where a measure is given in English units followed by a parenthetical containing SI or other units, the parenthetical's units are a conversion and should not imply a degree of precision not found in the English units.

One or more embodiments have been described. Nevertheless, it will be understood that various modifications may be made. For example, when applied to an existing basic system, details of such configuration or its associated use may influence details of particular implementations. Accordingly, other embodiments are within the scope of the following claims.

## Claims

1. A magnetic bearing (20) comprising:
a rotor (22) to be supported for rotation about an axis (502), the rotor comprising a metallic core (160, 28) having a radially outward extending flange (166), wherein the flange (166) has first and second axial end faces (170, 172);
a stator (24) extending from a first end (30) to a second end (32) and comprising:
one or more first permanent magnet rings (110);
one or more second permanent magnet rings (112) of polarity substantially opposite to a polarity of the one or more first permanent magnet rings (110);
a first axial winding (34) circumscribing the axis (502);
a second axial winding (36) circumscribing the axis (502);
a first end pole (120); and
a second end pole (122);
wherein the first and second axial end faces (170, 172) of the flange (166) are separated from the first and second end poles (120, 122) by gaps (190, 192)
wherein the magnetic bearing is a thrust bearing (20) without radial windings.

2. The magnetic bearing of claim 1 wherein the one or more first permanent magnet rings and the one or more second permanent magnet rings are non-rare earth magnets.

3. The magnetic bearing of claim 1 lacking stator laminates.

4. The magnetic bearing of any preceding claim, wherein: the metallic core radial flange (166) carries an axially laminated metallic jacket (334).

5. The magnetic bearing of claim 4 wherein: the first end pole and second end pole extend radially inboard of the axially laminated metallic jacket.

6. The magnetic bearing of claim 4 wherein the flange (166) carries:
a radially laminated first laminate (330) adjacent the first end pole; and
a radially laminated second laminate (332) adjacent the second end pole.

7. The magnetic bearing of claim 6 wherein: the radially laminated first laminate (330) is a continuous annulus; and
the radially laminated second laminate (332) is a continuous annulus.

8. The magnetic bearing of claim 1 wherein: the metallic core radial flange carries an annular magnet (430, 432, 434).

9. The magnetic bearing of claim 1 wherein: the metallic core radial flange carries a magnet (434) having essentially radial polarization.

10. The magnetic bearing of claim 1 wherein: the metallic core radial flange carries a pair of magnets (430, 432) of axially opposed polarization.

11. The magnetic bearing of claim 1 wherein the stator further comprises:
a central back iron (70) between the one or more first permanent magnets and the one or more second permanent magnets, optionally wherein:
the central back iron (70) has an inner diameter rim radially inboard of the first axial winding and the second axial winding.

12. A method for using the magnetic bearing of claim 1, the method comprising running current through:
the first axial winding; and
the second axial winding,
so as to:
control axial force or position by simultaneously powering the first axial winding and the second radial winding.

13. The method of claim 12 wherein: the first and second axial windings are powered by at least one H bridge amplifier.

14. The method of claim 12 wherein: the first and second axial windings are each powered by a respective associated H-bridge amplifier.

15. A machine comprising a bearing according to claim 1.

## Patentansprüche

1. Magnetisches Lager (20), umfassend:
einen Rotor (22), um die Drehung um eine Achse (502) zu unterstützen, wobei der Rotor einen Metallkern (160, 28) mit einem sich radial nach außen erstreckenden Flansch (166) umfasst, wobei der Flansch (166) erste und zweite axiale Endflächen (170, 172) aufweist;
einen Stator (24), der sich von einem ersten Ende (30) zu einem zweiten Ende (32) erstreckt und umfasst:
einen oder mehrere erste Permanentmagnetringe (110);
einen oder mehrere zweite Permanentmagnetringe (112) mit einer Polarität, die einer Polarität des einen oder der mehreren ersten Permanentmagnetringe (110) im Wesentlichen entgegengesetzt ist;
eine erste axiale Wicklung (34), welche die Achse (502) umschreibt;
eine zweite axiale Wicklung (36), welche die Achse (502) umschreibt;
einen ersten Endpol (120); und
einen zweiten Endpol (122);
wobei die erste und die zweite axiale Endfläche (170, 172) des Flansches (166) durch Lücken (190, 192) vom ersten und zweiten Endpol (120, 122) getrennt sind, wobei das magnetische Lager ein Axiallager (20) ohne radiale Wicklungen ist.

2. Magnetisches Lager nach Anspruch 1, wobei der eine oder die mehreren ersten Permanentmagnetringe und der eine oder die mehreren zweiten Permanentmagnetringe Nicht-Seltenerdmagnete sind.

3. Magnetisches Lager nach Anspruch 1 ohne Statorlaminate.

4. Magnetisches Lager nach einem vorstehenden Anspruch, wobei: der Metallkern-Radialflansch (166) eine axial laminierte Metallummantelung (334) trägt.

5. Magnetisches Lager nach Anspruch 4, wobei: sich der erste Endpol und der zweite Endpol radial innerhalb der axial laminierten Metallummantelung erstrecken.

6. Magnetisches Lager nach Anspruch 4, wobei der Flansch (166) Folgendes trägt:
ein radial laminiertes erstes Laminat (330) benachbart des ersten Endpols; und
ein radial laminiertes zweites Laminat (332) benachbart des zweiten Endpols.

7. Magnetisches Lager nach Anspruch 6, wobei:
das radial laminierte erste Laminat (330) ein durchgehender Ring ist; und
das radial laminierte zweite Laminat (332) ein durchgehender Ring ist.

8. Magnetisches Lager nach Anspruch 1, wobei: der Metallkern-Radialflansch einen ringförmigen Magneten (430, 432, 434) trägt.

9. Magnetisches Lager nach Anspruch 1, wobei: der Metallkern-Radialflansch einen Magneten (434) mit im Wesentlichen radialer Polarisation trägt.

10. Magnetisches Lager nach Anspruch 1, wobei: der Metallkern-Radialflansch ein Magnetpaar (430, 432) mit axial entgegengesetzter Polarisation trägt.

11. Magnetisches Lager nach Anspruch 1, wobei der Stator weiter umfasst:
einen zentralen Rückschluss (70) zwischen dem einen oder den mehreren ersten Permanentmagneten und dem einen oder den mehreren zweiten Permanentmagneten, gegebenenfalls wobei:
der zentrale Rückschluss (70) einen Innendurchmesserrand radial innerhalb der ersten axialen Wicklung und der zweiten axialen Wicklung aufweist.

12. Verfahren zur Verwendung des magnetischen Lagers nach Anspruch 1, wobei das Verfahren das Durchlaufen von Strom durch Folgendes umfasst:
die erste axiale Wicklung; und
die zweite axiale Wicklung, um:
die Axialkraft oder -position durch gleichzeitiges Antreiben der ersten axialen Wicklung und der zweiten radialen Wicklung zu steuern.

13. Verfahren nach Anspruch 12, wobei: die erste und die zweite axiale Wicklung von mindestens einem H-Brückenverstärker angetrieben werden.

14. Verfahren nach Anspruch 12, wobei: die erste und die zweite axiale Wicklung jeweils von einem jeweiligen zugeordneten H-Brückenverstärker angetrieben werden.

15. Maschine, umfassend ein Lager nach Anspruch 1.

## Revendications

1. Palier magnétique (20) comprenant :
un rotor (22) à supporter en rotation autour d'un axe (502), le rotor comprenant un noyau métallique (160, 28) ayant une bride s'étendant radialement vers l'extérieur (166), dans lequel la bride (166) présente des première et seconde faces d'extrémité axiales (170, 172) ;
un stator (24) s'étendant depuis une première extrémité (30) vers une seconde extrémité (32) et comprenant :
un ou plusieurs premiers anneaux d'aimant permanent (110) ;
un ou plusieurs seconds anneaux d'aimant permanent (112) de polarité sensiblement opposée à une polarité de l'un ou plusieurs premiers anneaux d'aimant permanent (110) ;
un premier enroulement axial (34) circonscrivant l'axe (502) ;
un second enroulement axial (36) circonscrivant l'axe (502) ;
un premier pôle d'extrémité (120) ; et
un second pôle d'extrémité (122) ;
dans lequel les première et seconde faces d'extrémité axiales (170, 172) de la bride (166) sont séparées des premier et second pôles d'extrémité (120, 122) par des entrefers (190, 192)
dans lequel le palier magnétique est un palier de butée (20) sans enroulements radiaux.

2. Palier magnétique selon la revendication 1 dans lequel l'un ou plusieurs premiers anneaux d'aimant permanent et l'un ou plusieurs seconds anneaux d'aimant permanent sont des aimants autres que les terres rares.

3. Palier magnétique selon la revendication 1 dépourvu de feuilletages de stator.

4. Palier magnétique selon l'une quelconque des revendications précédentes, dans lequel : la bride radiale de noyau métallique (166) porte une chemise métallique feuilletée axialement (334).

5. Palier magnétique selon la revendication 4 dans lequel : les premier pôle d'extrémité et second pôle d'extrémité s'étendent radialement à l'intérieur de la chemise métallique feuilletée axialement.

6. Palier magnétique selon la revendication 4 dans lequel la bride (166) porte :
un premier feuilletage feuilleté radialement (330) adjacent au premier pôle d'extrémité ; et
un second feuilletage feuilleté radialement (332) adjacent au second pôle d'extrémité.

7. Palier magnétique selon la revendication 6 dans lequel : le premier feuilletage feuilleté radialement (330) est un anneau continu ; et
le second feuilletage feuilleté radialement (332) est un anneau continu.

8. Palier magnétique selon la revendication 1 dans lequel : la bride radiale de noyau métallique porte un aimant annulaire (430, 432, 434).

9. Palier magnétique selon la revendication 1 dans lequel : la bride radiale de noyau métallique porte un aimant (434) ayant une polarisation essentiellement radiale.

10. Palier magnétique selon la revendication 1 dans lequel : la bride radiale de noyau métallique porte une paire d'aimants (430, 432) de polarisation axialement opposée.

11. Palier magnétique selon la revendication 1 dans lequel le stator comprend en outre :
un contre-fer central (70) entre l'un ou plusieurs premiers aimants permanents et l'un ou plusieurs seconds aimants permanents, optionnellement dans lequel :
le contre-fer central (70) présente un rebord de diamètre intérieur radialement à l'intérieur du premier enroulement axial et du second enroulement axial.

12. Procédé d'utilisation du palier magnétique selon la revendication 1, le procédé comprenant un passage d'un courant à travers :
le premier enroulement axial ; et
le second enroulement axial,
de manière à :
commander une force axiale ou une position en alimentant simultanément le premier enroulement axial et le second enroulement axial.

13. Procédé selon la revendication 12 dans lequel : les premier et second enroulements axiaux sont alimentés par au moins un amplificateur de pont en H.

14. Procédé selon la revendication 12 dans lequel : les premier et second enroulements axiaux sont chacun alimentés par un amplificateur de pont en H associé respectif.

15. Machine comprenant un palier selon la revendication 1.
